# EUROPÄISCHE PATENTANMELDUNG

(11) **EP 4 819 406 A1**
(43) Veröffentlichungstag der Anmeldung: **07.10.2026**
(21) Anmeldenummer: 25168427.0
(22) Anmeldetag: 04.04.2025
(51) Int. Cl.: H01R 13/58, H01R 13/6592, H02G 15/02, H02G 15/04

(54) **STÜTZHÜLSE, VORKONFEKTIONIERTES KABEL ENTHALTEND DIE STÜTZHÜLSE UND STECKVERBINDERANORDNUNG ENTHALTEND DIE STÜTZHÜLSE**

(71) Anmelder: Rosenberger Hochfrequenztechnik GmbH & Co. KG, 83413 Fridolfing (DE)
(72) Erfinder: Speckbacher, Hubert, 83413 Fridolfing (DE)
(74) Vertreter: Lorenz & Kollegen

(57) **Zusammenfassung**

Die vorliegende Erfindung betrifft eine Stützhülse. Die vorliegende Erfindung betrifft ferner ein vorkonfektioniertes Kabel enthaltend die Stützhülse. Die vorliegende Erfindung betrifft schließlich eine Steckverbinderanordnung enthaltend die Stützhülse.

Eine Stützhülse (1) zur Führung und zur Fixierung von wenigstens einer Leitung (6₁, 6₂), vorzugsweise von wenigstens einer elektrischen Leitung (6₁, 6₂), weist einen Grundkörper (2), welcher um eine Längsachse (L_{A}) der Stützhülse (1) hülsenförmig ausgebildet ist, und an wenigstens einem axialen Ende (3, 22) des hülsenförmigen Grundkörpers (2) jeweils einen zur Längsachse (L_{A}) gerichteten stegförmigen Bereich (4) auf. Im stegförmigen Bereich (4) ist eine Durchführung (5) derart ausgebildet, dass jede Leitung (6) jeweils bewegungsfrei in der Durchführung (5) gehalten ist.

## Beschreibung

### GEBIET DER ERFINDUNG

Die vorliegende Erfindung betrifft eine Stützhülse zur Führung und zur Fixierung von wenigstens einer Leitung, welche einen hülsenförmigen Grundkörper aufweist.

Die vorliegende Erfindung betrifft außerdem ein vorkonfektioniertes Kabel, welches wenigstens eine Leitung, einen die wenigstens eine Leitung umhüllenden Schirm und einen den Schirm umhüllenden Kabelmantel aufweist. Auf einem vom Kabelmantel freigelegten Schirm am axialen Endbereich des vorkonfektionierten Kabels und/oder auf dem Kabelmantel ist hierbei eine Stützhülse fixiert und der Schirm um die fixierte Stützhülse zurückgelegt.

Schließlich betrifft die Erfindung auch eine Steckverbinderanordnung, welche das vorkonfektionierte Kabel und einen mit dem vorkonfektionierten Kabel verbundenen Steckverbinder aufweist. Der Steckverbinder weist hierbei ein Außenleiterkontaktelement auf, welches mit dem auf der Stützhülse zurückgelegten axialen Endbereich des Schirms verpresst, vorzugsweise vercrimpt, ist.

### TECHNISCHER HINTERGRUND

Bei einer Steckverbinderanordnung aus einem Kabel und einem zugehörigen Steckverbinder ist zwischen dem Kabel und dem Steckverbinder eine stabile elektrische und mechanische Verbindung zu schaffen. Bezüglich einer stabilen mechanischen Verbindung fordern nationale und internationale Normen eine bestimmte Haltekraft zwischen dem Steckverbinder und dem Kabel bei Ausüben eines Längs- oder Querzuges am Kabel.

Zur sicheren elektrischen und mechanischen Verbindung zwischen dem Steckverbinder und dem Kabel hat sich die Crimpverbindung als eine stabile und schnell herstellbare Verbindungstechnologie etabliert. Zur Optimierung der Crimpverbindung kommt vorzugsweise eine Stützhülse zum Einsatz, die im Fall einer elektrischen Steckverbindung auf dem vom Kabelmantel freigelegten Schirm und/oder direkt auf dem Kabelmantel und im Fall einer optischen Steckverbindung auf der vom Kabelmantel freigelegten Verstärkungsschicht vorfixiert ist. Das axiale Ende des Schirms bzw. der Verstärkungsschicht wird in der Regel über die Stützhülse zurückgelegt. Im Crimpvorgang wird bei einer elektrischen Steckverbindung der Schirm zwischen dem Außenleiterkontaktelement und der Stützhülse und bei einer optischen Steckverbindung die Verstärkungsschicht zwischen dem Steckverbindergehäuse und der Stützhülse jeweils form-, kraft- und/oder stoffschlüssig eingeklemmt. Im Crimpvorgang wird in der Stützhülse eine Federkraft erzeugt, indem die Stützhülse von einem mechanisch entspannten Grundzustand in einen elastisch vorgespannten Zustand überführt wird. Die Federkraft bewirkt eine optimierte Klemmung des Schirms bzw. der Verstärkungsschicht des Kabels am Steckverbinder.

Aus der EP 3 618 197 B1 geht eine Stützhülse für einen differentiellen elektrischen Steckverbinder hervor. Zur besseren Angleichung der Querschnittskontur der Stützhülse an das Querschnittsprofil des differentiellen Kabels sind an der Stützhülse steckseitig zwei gegenüberliegende U-förmige Profile ausgebildet.

Die Stützhülse mit den beiden steckseitig ausgebildeten U-förmigen Profilen ist nachteilig mit einem erheblichen Fertigungs- und Montageaufwand verbunden.

Dies ist ein Zustand, den es zu verbessern gilt.

### BESCHREIBUNG DER ERFINDUNG

Vor diesem Hintergrund liegt der vorliegenden Erfindung die Aufgabe zugrunde, eine Stützhülse für ein Kabel mit wenigstens einer Leitung, vorzugsweise für ein Kabel mit wenigstens einem Leitungspaar, anzugeben, die einfach und damit kostengünstig herstellbar und montierbar ist.

Erfindungsgemäß wird diese Aufgabe durch eine Stützhülse mit den Merkmalen des Patentanspruchs 1, durch ein vorkonfektioniertes Kabel mit den Merkmalen des Patentanspruchs 14 und durch eine Steckverbinderanordnung mit den Merkmalen des Patentanspruches 15 gelöst.

Demgemäß ist vorgesehen:
Eine Stützhülse zur Führung und zur Fixierung von wenigstens einer Leitung, vorzugsweise von wenigstens einer elektrischen Leitung, aufweisend
- einen Grundkörper,
- welcher um eine Längsachse der Stützhülse hülsenförmig ausgebildet ist,
- wobei an wenigstens einem axialen Ende des hülsenförmigen Grundkörpers jeweils ein zur Längsachse gerichteter stegförmiger Bereich
- mit einer Durchführung derart ausgebildet ist, dass jede Leitung jeweils bewegungsfrei in der Durchführung gehalten ist.

Die der vorliegenden Erfindung zugrunde liegende Erkenntnis/Idee besteht darin, eine Stützhülse mit einem hülsenförmigen Grundkörper und mit jeweils einem stegförmigen Bereich an wenigstens einem axialen Ende des hülsenförmigen Grundkörpers zu schaffen. Die Durchführung des jeweiligen stegförmigen Bereichs ist jeweils so ausgebildet, dass jede Leitung jeweils bewegungsfrei in der Durchführung gehalten ist.

Auf diese Weise ist eine Stützhülse verwirklicht, in welcher die Fixierung vorzugsweise jeder Leitung des Kabels an der Stützhülse durch eine Ausformung wenigstens eines axialen Stirnbereichs bzw. einer axialen Stirnfläche der Stützhülse erfolgt. Im vorzugsweisen Anwendungsfall eines Kabels mit wenigstens einem Leitungspaar werden die beiden Leitungen jedes Leitungspaares in einer zugehörigen Ebene, welche jeweils durch die Längsachse der Stützhülse verläuft, durch die Ausformung des wenigstens eines axialen Stirnbereichs der Stützhülse ausgerichtet. Da einzig das planare Stanzbild der Stützhülse die Form der Durchführung des einzelnen stegförmigen Bereichs der Stützhülse bestimmt, kann gegenüber dem Stand der Technik einfacher und präziser die Größe und die Ausformung der Durchführung in der Stützhülse an die verwendete Kabelkonfiguration angepasst werden. Im Gegensatz zur Stützhülse der EP 3 618 197 B1, welche einzig mit einem zweiteiligen Crimpwerkzeug herstellbar ist, lässt sich die erfindungsgemäße Stützhülse über ihre gesamte Längserstreckung mit einem einzigen Crimpwerkzeug herstellen. Die Ausbildung der Fixierung bzw. der Ausrichtung der einzelnen Leitungen einzig an wenigstens einem axialen Ende der Stützhülse reduziert darüber hinaus den Materialverbrauch für die Stützhülse.

Die Erfindung betrifft eine Stützhülse zur mittelbaren oder unmittelbaren Befestigung auf einem Kabel, vorzugsweise auf einem elektrischen Kabel. Nachfolgend wird die Erfindung im Wesentlichen zur Verwendung mit einem elektrischen Kabel beschrieben, was allerdings nicht einschränkend zu verstehen ist, da sich die Stützhülse beispielsweise auch zur Befestigung auf einem optischen Kabel eignen kann.

Die Erfindung betrifft eine Stützhülse zur mittelbaren oder unmittelbaren Befestigung auf einem elektrischen Kabel, welches vorzugsweise wenigstens ein elektrisches Leitungspaar mit jeweils zwei elektrischen Leitungen zur Übertragung von jeweils einem differentiellen elektrischen Signal aufweist. Nachfolgend wird die Erfindung im Wesentlichen zur Verwendung mit einem elektrischen Kabel beschrieben, welches wenigstens ein elektrischen Leitungspaar aufweist, was ebenfalls nicht einschränkend zu verstehen ist. Die Stützhülse ist auch für ein elektrisches Kabel mit einer ungeraden Anzahl von elektrischen Leitungen geeignet, beispielsweise für ein koaxiales elektrisches Kabel mit einer einzigen elektrischen Innenleitung, zur Übertragung eines asymmetrischen elektrischen Signals oder für ein elektrisches Kabel mit drei elektrischen Leitungen zur Übertragung eines dreiphasigen Drehstroms. Insbesondere können mehrere elektrische Leitungen in der Stützhülse fixiert und ausgerichtet sein. Vorzugsweise ist die Stützhülse zur kraft-, form- und/oder stoffschlüssigen Fixierung eines elektrischen Schirms des Kabels vorgesehen. Insbesondere kann vorgesehen sein, dass der Schirm zwischen der Stützhülse und einem nachfolgend noch genannten Außenleiterkontaktelement kraft- form- und/oder stoffschlüssig fixierbar ist, insbesondere einklemmbar ist.

Zur bestmöglichen Klemmung des Schirms des Kabels zwischen dem Außenleiterkontaktelement und der Stützhülse ist die Stützhülse in Äquivalenz zum Außenleiterkontaktelement über ihre Längserstreckung im Wesentlich hülsenförmig ausgebildet. Die hülsenförmige Ausbildung der Stützhülse, insbesondere die hülsenförmige Ausbildung des Grundkörpers der Stützhülse, schließt Unterbrechungen in der hülsenförmigen Stützhülsengeometrie wie beispielsweise Schlitze, Löcher, Bohrungen, Einkerbungen usw. nicht aus. Der hülsenförmige Grundkörper der Stützhülse umhüllt den Schirm und das vom Schirm umhüllte wenigstens eine elektrische Leitungspaar entlang der Längserstreckung der Stützhülse im Wesentlichen vollständig.

Der an wenigstens einem axialen Ende des hülsenförmigen Grundkörpers jeweils ausgebildete stegförmige Bereich der Stützhülse ist jeweils zur Längsachse der Stützhülse gerichtet. Auf diese Weise ist die Größe der Durchführung für das wenigstens eine elektrische Leitungspaar im Bereich der stegförmigen Bereiche gegenüber den übrigen Längsabschnitten des hülsenförmigen Grundkörpers reduziert. Die Klemmung des wenigstens einen elektrischen Leitungspaares innerhalb der Stützhülse ist damit auf den Bereich der stegförmigen Bereiche der Stützhülse beschränkt. Die Präzision der Stützhülse kann somit auf die im jeweiligen stegförmigen Bereich jeweils ausgebildete Durchführung beschränkt werden. Der hülsenförmige Grundkörper der Stützhülse kann somit in einer geringeren Fertigungspräzision gefertigt sein und beispielsweise einen geringen Längsspalt aufweisen.

Der stegförmige Bereich an einem axialen Ende des hülsenförmigen Grundkörpers der Stützhülse ist zur Längsachse der Stützhülse gerichtet, d. h. eine Längserstreckung des stegförmigen Bereichs ist zur Längsachse der Stützhülse und somit zu den elektrischen Leitungen des wenigstens einen elektrischen Leitungspaares bzw. zum dazwischen angeordneten Schirm gerichtet. Es handelt sich also jeweils um einen innseitig am hülsenförmigen Grundkörper ausgebildeten Steg bzw. stegförmigen Bereich.

Die stegförmigen Bereiche und der hülsenförmige Grundkörper der Stützhülse sind vorzugsweise einteilig ausgebildet. Es ist aber nicht ausgeschlossen, dass in einer weniger bevorzugten Ausführung der Stützhülse die stegförmigen Bereiche und der Grundkörper der Stützhülse mehrteilig ausgeführt sein können und geeignet miteinander verbunden sein können. Die Stützhülse ist vorzugsweise aus Kupfer, einer Kupferlegierung wie Messing oder Kupferbronze, Stahl, insbesondere Federstahl, und in selteneren Anwendungsfällen aus Aluminium oder einem Kunststoff hergestellt und in bestimmten Fällen mit einem geeigneten Beschichtungsmaterial beschichtet.

Der stegförmige Bereich ist jeweils derart ausgeformt, dass die elektrischen Leitungen jedes elektrischen Leitungspaares bewegungsfrei in der Durchführung des stegförmigen Bereichs gehalten sind. Um die einzelnen elektrischen Leitungen in der Durchführung der stegförmigen Bereiche der Stützhülse zu halten, insbesondere bewegungsfrei zu halten, d. h. in einer bestimmten Position relativ zu einer Längsachse der Stützhülse, beispielsweise zur Mittenachse der Stützhülse, zu fixieren, ist jede elektrische Leitung jedes elektrischen Leitungspaares vorzugsweise jeweils in beiden Richtungen (positive Richtung und negative Richtung) der beiden Richtungsdimensionen, welche jeweils senkrecht zur Längsachse der Stützhülse und senkrecht zueinander orientiert sind, abzustützen.

Sofern sich die elektrische Leitung nicht an wenigstens einer weiteren elektrischen Leitung in einer Richtung von mindestens einer Richtungsdimension abstützt, ist die einzelne elektrische Leitung vorzugsweise durch eine entsprechende Ausformung der Durchführung des jeweiligen stegförmigen Bereichs an der Begrenzung der Durchführung in den übrigen Richtungen der jeweils übrigen Richtungsdimensionen - vorzugsweise mittelbar über den dazwischen angeordneten Schirm - abzustützen. Die Abstützung zwischen der elektrischen Leitung und der Begrenzung der Durchführung kann hierbei beispielsweise entweder linienförmig oder flächenförmig erfolgen.

Eine linienförmige Abstützung zwischen der elektrischen Leitung und der Begrenzung bzw. dem Innenmantel der Durchführung erstreckt sich vorzugsweise in Richtung der Längsachse der Stützhülse. Eine flächenförmige Abstützung zwischen der elektrischen Leitung und der Begrenzung bzw. dem Innenmantel der Durchführung erstreckt sich vorzugsweise in einem bestimmten Innenmantelsegment des stegförmigen Bereichs in Richtung der Längsachse und im Umfangrichtung der Stützhülse. Insbesondere bei einer Deformation des Querschnittes der elektrischen Leitung infolge einer Klemmung in der Durchführung des jeweiligen stegförmigen Bereichs - aber nicht ausschließlich im Deformationsfall - liegt eine flächenförmige Abstützung zwischen der Begrenzung der Durchführung und der elektrischen Leitung vor.

Neben dem Halten bzw. dem Fixieren der einzelnen elektrischen Leitung in der Durchführung des jeweiligen stegförmigen Bereichs der Stützhülse sind die beiden elektrischen Leitungen eines elektrischen Leitungspaares in einer zugehörigen gedachten Ebene innerhalb der Durchführung positionierbar, in welcher die Längsachse der Stützhülse zu liegen kommt. Somit sind die beiden elektrischen Leitungen jedes elektrischen Leitungspaares für den Prozess der Kabelkonfektion in einer definierten Orientierung innerhalb des Steckverbinders ausrichtbar.

Vorteilhafte Ausgestaltungen und Weiterbildungen ergeben sich aus den weiteren Unteransprüchen sowie aus der Beschreibung unter Bezugnahme auf die Figuren der Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

In einer vorzugsweisen Weiterbildung der erfindungsgemäßen Stützhülse kann die Begrenzung der Durchführung wenigstens Bereiche aufweisen, welche jeweils derart ausgeformt sind, um wenigstens einen Abschnitt einer Oberflächenkontur einer angrenzenden elektrischen Leitung der elektrischen Leitungspaare zu folgen. Auf diese Weise ist eine flächenmäßige Abstützung der einzelnen elektrischen Leitung an einen angrenzenden Abschnitt der Innenwand des stegförmigen Bereichs verwirklicht.

Die Konturfolge der Begrenzung der Durchführung, d. h. der Innenwand des stegförmigen Bereichs, kann sich über einen begrenzten Umfangsabschnitt des zylindrischen Mantels der elektrischen Leitung, beispielweise über einen halbzylindrischen oder einen viertelzylindrischen oder einen dreiviertelzylindrischen Mantelabschnitt der elektrischen Leitung, erstrecken. In einer extremen Ausprägung kann die Innenwand des stegförmigen Bereichs die einzelne elektrische Leitung vollzylindrisch umschließen und somit die einzelnen elektrischen Leitungen der elektrischen Leitungspaare näherungsweise vollständig voneinander separieren. Die beispielhaft genannten Werte für eine Konturfolge zeigen, dass sich die einzelne elektrische Leitung in wenigsten einer Richtung von jeweils zwei Richtungsdimensionen an der Innenwand des stegförmigen Bereichs abstützen kann. In der jeweils anderen Richtung der beiden Richtungsdimensionen kann sich die einzelne elektrische Leitung an wenigsten einer weiteren benachbarten elektrischen Leitung abstützen (die beiden Richtungsdimensionen sind hierbei orthogonal zueinander orientiert). Letzteres muss aber nicht zwingend sein, da eine elektrische Leitung von einer benachbarten elektrischen Leitung durch einen Luftspalt beabstandet sein kann und trotzdem in der Durchführung des stegförmigen Bereiches in beiden Richtungsdimensionen fixiert gehalten sein kann.

In einer alternativen vorzugsweisen Weiterbildung der erfindungsgemäßen Stützhülse kann die Durchführung ein rechteckförmiges Profil aufweisen, deren Seitenflächen jeweils derart ausgebildet sind, um mit wenigstens einer angrenzenden elektrischen Leitung der elektrischen Leitungspaare jeweils zumindest linienförmig verbunden zu sein. Unter einem "Verbunden sein" wird hierbei zumindest ein mittelbares "Verbunden sein" zwischen der elektrischen Leitung und der zugehörigen Seitenflächen der im stegförmigen Bereich ausgebildeten Durchführung über einen dazwischen angeordneten Schirm verstanden. Das rechteckförmige Profil kann abgerundete Ecken oder ausgeprägte Ecken aufweisen. Beim Schirm kann es sich hierbei um miteinander verflochtene metallische Drähte und/oder um eine metallisierte Kunststofffolie handeln.

Im Idealfall kann es zu keiner Kompression der elektrischen Leitungen durch die stegförmigen Bereiche der Stützhülse kommen, so dass Seitenflächen der Durchführung mit korrespondierend angrenzenden elektrischen Leitungen einzig linienförmig verbunden sind. Bei einer Kompression der elektrischen Leitungen durch die stegförmigen Bereiche der Stützhülse können Seitenflächen der Durchführung mit korrespondierend angrenzenden elektrischen Leitungen vorzugsweise flächenförmig verbunden sein.

Während die obig erläuterten Geometrien für eine Durchführung in einem am steckseitigen Ende der Stützhülse ausgebildeten stegförmigen Bereich im Hinblick auf eine korrekte Ausrichtung der beiden elektrischen Leitungen eines elektrischen Leitungspaares zweckdienlich sind, kann eine Durchführung in einem am kabelseitigen Ende der Stützhülse ausgebildeten stegförmigen Bereich vorzugsweise ein rundes Profil aufweisen. In diesem Fall kann bei einem Kabel mit zueinander verseilten elektrischen Leitungen jede einzelne elektrische Leitung jeweils in einem definierten Drehwinkel zu den übrigen elektrischen Leitungen, aber jeweils in einem beliebigen Drehwinkel zu einer gedachten Bezugsachse der Durchführung die Durchführung des kabelseitigen stegförmigen Bereiches der Stützhülse passieren. Außerdem verhindert ein an beiden axialen Enden der Stützhülse jeweils ausgebildeter stegförmiger Bereich ein nachteiliges Verkippen der Stützhülse relativ zu den elektrischen Leitungen.

In einer bevorzugten Ausprägung der erfindungsgemäßen Stützhülse ist diese als ein Stanz-Biege-Teil ausgebildet. Die Stanz-Biege-Technik ermöglicht eine kostengünstige Herstellung in einem hohen bis sehr hohen Volumen. Außerdem ist durch die Stanz-Biege-Technik erst eine Ausformung der stegförmigen Bereiche der Stützhülse mit den obig erläuterten Geometrien für eine Durchführung im jeweiligen stegförmigen Bereich mit einem realistischen Aufwand möglich.

Die Stützhülse in Stanz-Biegetechnik weist einen Längsspalt auf, der vorzugsweise geschlossen ist oder allenfalls eine kleine bis sehr kleine Spaltbreite aufweist. Der hülsenförmige Grundkörper der Stützhülse kann vorzugsweise durch eine formschlüssige Verbindung zwischen den beiden Seitenkanten der Stützhülse mechanisch stabilisiert sein. Hierzu ist an der eine Seitenkante wenigstens eine Aussparung ausgebildet, welche jeweils mit einer korrespondierenden an der anderen Seitenkante ausgebildeten Erhebung fixierbar sein kann. Die Erhebung kann beispielsweise als eine fingerförmige oder eine puzzleförmige Erhebung ausgebildet sein, welche mit einer fingerförmigen bzw. einer puzzleförmigen Aussparung im Eingriff sein kann.

In einer weiteren vorzugsweisen Ausprägung der erfindungsgemäßen Stützhülse kann der stegförmige Bereich der Stützhülse als eine Bördelung ausgebildet sein. Unter Bördelung wird hierbei und im Folgenden ein Umbiegen eines axialen Randbereiches der Stützhülse zur Ausbildung eines innenseitigen stegförmiges Bereiches verstanden. Die Bördelung kann vorzugsweise im Rahmen des Stanz-Biegeprozesses durchgeführt werden.

Die axialen Randbereiche des zur Stützhülse gehörigen planaren Stanzbildes können geeignet eingeschlitzt werden, um stegförmige Bereiche an den axialen Enden des hülsenförmigen Grundkörpers ohne Wölbungen oder Materialaufwerfungen im Biegeprozesse zu erzielen. Somit kann vorzugsweise in jedem stegförmigen Bereich jeweils wenigstens ein Schlitz, vorzugsweise mehrere äquidistant ausgebildete Schlitze, ausgebildet sein. Der einzelne Schlitz kann bevorzugt geschlossen ausgebildet sein. Aufgrund von Fertigungstoleranzen kann der einzelne Schlitz auch geringfügig geöffnet sein.

Liegt ein Kabel mit einem einzigen elektrischen Leitungspaar zur Übertragung eines einzigen differentiellen Signals vor, so kann die Durchführung des stegförmigen Bereichs der Stützhülse, insbesondere des steckseitigen stegförmigen Bereichs der Stützhülse, vorzugsweise ellipsenförmig ausgeformt sein. Konsequenterweise kann in einer weiteren vorzugsweisen Weiterbildung der erfindungsgemäßen Stützhülse ein Querschnitt des Außenmantels der Stützhülse entlang einer Längserstreckung des Grundkörpers ebenfalls elliptisch ausgeformt sein. Der Bauraum einer derartig ausgeformten Stützhülse ist vorteilhaft minimiert.

In einer alternativen vorzugsweisen Weiterbildung der erfindungsgemäßen Stützhülse kann ein Querschnitt des Außenmantels der Stützhülse entlang einer Längserstreckung des Grundkörpers rund ausgeformt sein. In diesem Fall ist das runde Außenmantelprofil der Stützhülse optimal an ein typischerweise ebenfalls rundes Querschnittsprofil des Außenleiterkontaktelements angepasst. Die Crimpverbindung, bei der der Schirm zwischen dem runden Innenmantelprofil des Außenleiterkontaktelements und dem runden Außenmantelprofil der Stützhülse eingepresst bzw. eingeklemmt ist, ist in diesem Fall bestmöglich verwirklichbar.

Die Längserstreckung des stegförmigen Bereichs kann zur Längserstreckung des hülsenförmigen Grundkörpers der Stützhülse, d. h. zur Längsachse der Stützhülse, in einem Winkel zwischen 45° und 135°, vorzugsweise in einem Winkel zwischen 70° und 110° und besonders vorzugsweise in einem Winkel zwischen 90° und 100° orientiert sein. Ein Winkel von kleiner 90° stellt eine Hinterschneidung dar, welcher nachteilig nur mit einem erheblichen Aufwand herstellbar ist. Eine bestmögliche Bördelung ergibt sich bei einem Winkel von 90°, während sich mit zunehmendem Winkel die mechanische Stabilität der Bördelung verschlechtert.

Insbesondere bei kleinen Biegeradien kann an einer Innenkante zwischen dem hülsenförmigen Grundkörper und dem stegförmigen Bereich ein Freistich ausgebildet sein. Erst die Ausbildung eines derartigen Freistichs ermöglicht das Biegen bzw. Bördeln des stegförmigen Bereichs bei kleinen Biegeradien.

In einer vorzugsweisen Weiterbildung der Stützhülse kann der stegförmige Bereich umlaufend, d. h. über einen Winkelbereich von 360°, ausgebildet sein. Insbesondere eine umlaufende Bördelung begünstigt eine zentrierte oder symmetrische Anordnung der einzelnen elektrischen Leitungen zur Längsachse der Stützhülse, d. h. zur Mittenachse der Stützhülse, innerhalb der Stützhülse.

In einer alternativen vorzugsweisen Weiterbildung der Stützhülse kann der stegförmige Bereich in Innenmantelabschnitten des hülsenförmigen Grundkörpers derart ausgesetzt sein, dass der jeweilige Innenmantelabschnitt mit einem Außenmantelabschnitt einer angrenzenden elektrischen Leitung der elektrischen Leitungspaare verbunden ist. Der stegförmige Bereich läuft hierbei aus und geht in die Innenmantelfläche des hülsenförmigen Grundkörpers über. Auf diese Weise sind die elektrischen Leitungen, welche in der Umgebung der stegförmigen Bereiche jeweils mit den Innenmantelabschnitten des hülsenförmigen Grundkörpers verbunden sind, entlang der gesamten Längserstreckung der Stützhülse am Innenmantel der Stützhülse geführt und somit insgesamt stabiler geführt.

Um ein Abschneiden bzw. ein Abbrechen der einzelnen elektrischen Drähte, welche im Schirm miteinander verflochten bzw. verwoben sind, an den scharfen Innenkanten der stegförmigen Bereiche der Stützhülse beim Fixieren der Stützhülse am Schirm und/oder beim Crimpen des Außenleiterkontaktelements mit dem Schirm zu verhindern, kann an der innen- und/oder außenseitigen Kante der stegförmigen Bereiche der Stützhülse vorzugsweise jeweils eine Fase oder ein Kantenbruch ausgebildet sein.

In einer weiteren vorzugsweisen Ausbildung einer erfindungsgemäßen Stützhülse kann an einer Innenwand bzw. einer Begrenzung der Durchführung wenigstens ein spitzer oder scharfkantiger Vorsprung ausgebildet sein. Ein derartiger spitzer oder scharfkantiger Vorsprung kann insbesondere in Bereichen der Begrenzung der Durchführung ausgebildet sein, in welchen jeweils eine direkte Berührung zwischen dem spitzen oder scharfkantigen Vorsprung und einer elektrischen Leitung der elektrischen Leitungspaare ausgeschlossen ist. Dies ist insbesondere in Bereichen der Innenwand der Durchführung der Fall, welche planar ausgeformt sind.

Auf diese Weise kann sich im Fall eines einzigen elektrischen Leitungspaares ein "brillenförmiges Profil" oder ein "achtförmiges Profil" für die Durchführung und im Fall von zwei elektrischen Leitungspaaren ein "vierblättriges Kleeblatt-Profil" für die Durchführung ergeben. Der spitze oder scharfkantige Vorsprung an der Innenwand der Durchführung kann bevorzugt in den angrenzenden Schirm des elektrischen Kabels eindringen und somit vorteilhaft eine zusätzliche Fixierung der Stützhülse am Kabel über den Schirm bewirken.

Die Erfindung betrifft außerdem ein erfindungsgemäßes vorkonfektioniertes Kabel, vorzugsweise ein vorkonfektioniertes elektrisches Kabel, welches wenigstens eine Leitung, einen die wenigstens eine Leitung umhüllenden Schirm und einen den Schirm umhüllenden Kabelmantel aufweist. Der Schirm ist hierbei in einem axialen Endbereich des vorkonfektionierten Kabels vom Kabelmantel freigelegt. Am freigelegten Schirm und/oder am Kabelmantel ist eine erfindungsgemäße Stützhülse fixiert. Ein axialer Endbereich des Schirms ist um die Stützhülse zurückgelegt.

Auf vorteilhafte Weise kann eine Stützhülse für ein vorkonfektioniertes Kabel bereitgestellt werden, in welcher die einzelnen elektrischen Leitungen des Kabels bestmöglich fixiert und ausgerichtet sind und gleichzeitig eine aufwandsarme und somit kostengünstige Herstellung der Stützhülse möglich ist.

Die bisher und im Folgenden zur Stützhülse jeweils erwähnten technischen Merkmale, technischen Wirkungen und technischen Vorteile gelten äquivalent beim vorkonfektionierten Kabel und umgekehrt.

Die Erfindung betrifft schließlich auch eine erfindungsgemäße Steckverbinderanordnung, vorzugsweise eine elektrische Steckverbinderanordnung, welche ein erfindungsgemäßes vorkonfektioniertes Kabel und einen mit dem erfindungsgemäßen vorkonfektionierten Kabel verbundenen Steckverbinder aufweist. Der Steckverbinder weist hierbei ein Außenleiterkontaktelement auf, welches mit dem auf der erfindungsgemäßen Stützhülse zurückgelegten axialen Endbereich des Schirms verpresst, vorzugsweise vercrimpt, ist.

Die bisher und im Folgenden zur Stützhülse und zum vorkonfektionierten Kabel jeweils erwähnten technischen Merkmale, technischen Wirkungen und technischen Vorteile gelten äquivalent bei der Steckverbinderanordnung und umgekehrt.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1A, 1B: eine isometrische Darstellung und eine stirnseitige Darstellung eines ersten Ausführungsbeispiels einer erfindungsgemäßen Stützhülse,
- Fig. 1C, 1D: eine isometrische Darstellung und eine stirnseitige Darstellung eines zweiten Ausführungsbeispiels einer erfindungsgemäßen Stützhülse,
- Fig. 1E, 1F: eine isometrische Darstellung und eine stirnseitige Darstellung eines dritten Ausführungsbeispiels einer erfindungsgemäßen Stützhülse,
- Fig. 1G, 1H: eine isometrische Darstellung eines vierten und fünften Ausführungsbeispiels einer erfindungsgemäßen Stützhülse,
- Fig. 1I, 1J: eine isometrische Darstellung eines sechsten und siebten Ausführungsbeispiels einer erfindungsgemäßen Stützhülse,
- Fig: 2A, 2B: eine isometrische Darstellung eines erfindungsgemäßen vorkonfektionierten Kabels mit dem sechsten und fünften Ausführungsbeispiel einer erfindungsgemäßen Stützhülse,
- Fig. 3A, 3B: zwei Längsschnittdarstellungen einer erfindungsgemäßen Stützhülse,
- Fig. 4A, 4B: Längsschnittdarstellungen eines erfindungsgemä-ßen vorkonfektionierten Kabels mit zwei Ausprägungen einer erfindungsgemäßen Stützhülse,
- Fig. 5: eine Längsschnittdarstellung eines erfindungsgemäßen Steckverbinders und
- Fig. 6A, 6B, 6C: isometrische Darstellungen einer erfindungsgemäßen Stützhülse im Fertigungsprozess.

Die beiliegenden Figuren der Zeichnung sollen ein weiteres Verständnis der Ausführungsformen der Erfindung vermitteln.

Sie veranschaulichen Ausführungsformen und dienen im Zusammenhang mit der Beschreibung der Erklärung von Prinzipien und Konzepten der Erfindung. Andere Ausführungsformen und

viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

Im Folgenden werden die Figuren zusammenhängend und übergreifend beschrieben.

### BESCHREIBUNG VON AUSFÜHRUNGSBEISPIELEN

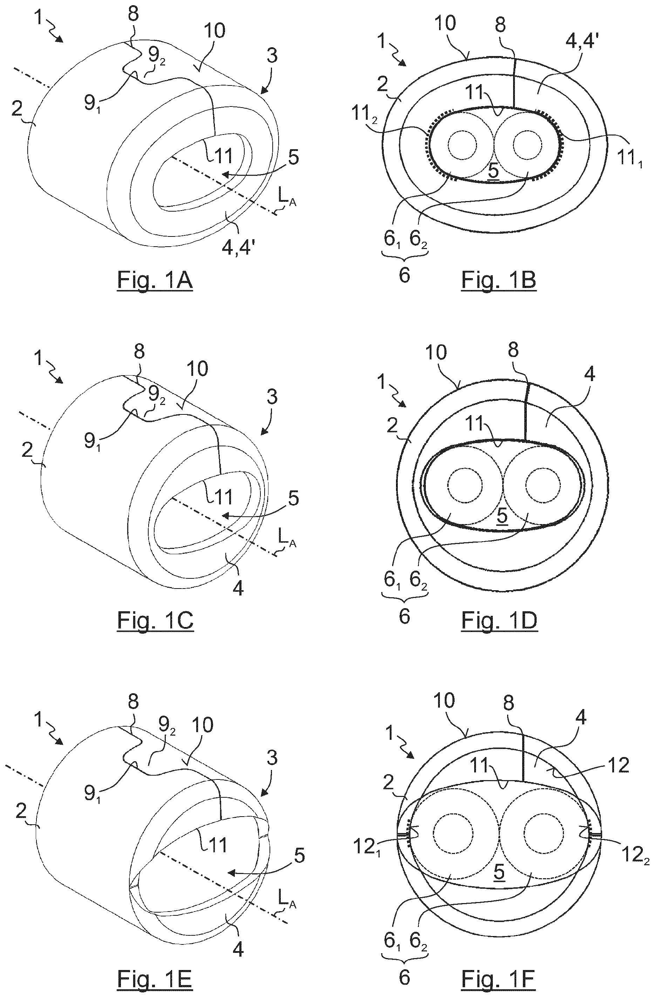

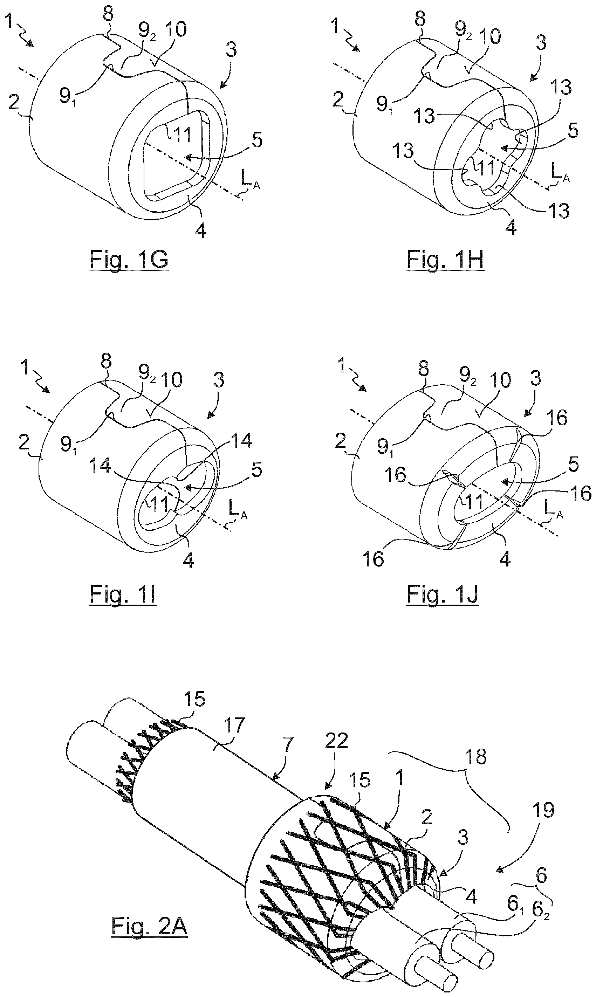

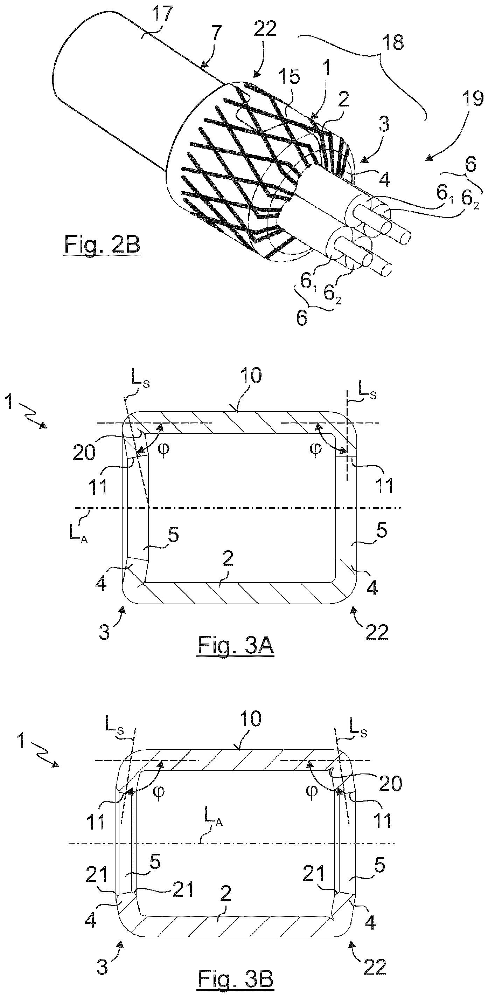

Anhand der Figuren 1A - 1J werden im folgenden verschiedene Ausführungsbeispiele einer erfindungsgemäßen Stützhülse erläutert:
Die erfindungsgemäße Stützhülse 1 weist in allen Ausführungsbeispielen jeweils einen hülsenförmigen Grundkörper 2 und an wenigstens einem axialen Ende des hülsenförmigen Grundkörpers 2, vorzugsweise an einem steckseitigen axialen Ende 3 des hülsenförmigen Grundkörpers 2, jeweils einen stegförmigen Bereich 4 auf. Der hülsenförmige Grundkörper 2 und der wenigstens eine stegförmige Bereich 4 sind vorzugsweise, wie aus den Figuren 1A - 1J jeweils hervorgeht, einteilig ausgebildet. Der stegförmige Bereich 4 weist eine Durchführung 5 auf, durch die in den Figuren 1B, 1D und 1F jeweils gestrichelt dargestellte elektrischen Leitungen 6₁ und 6₂ von wenigstens einem elektrischen Leitungspaar 6 eines elektrischen Kabels 7 (siehe hierzu Fig. 2A und 2B) hindurchgeführt und fixiert sind. Durch die Ausformung der Durchführung 5 sind die einzelnen elektrischen Leitungen 6₁ und 6₂ jedes elektrischen Leitungspaares 6 jeweils in einer zugehörigen Ebene ausgerichtet. Die einzelnen Leitungen 6₁ und 6₂ jedes elektrischen Leitungspaares 6 sind jeweils wie üblich als eine Ader, d. h. als ein von einer Isolation umhüllter elektrischer Leiter, ausgebildet.

Die Stützhülse 1 ist vorzugsweise als ein Stanz-Biege-Bauteil ausgeführt und weist somit in Richtung der Längsachse L_{A} der Stützhülse 1 einen Längsschlitz 8 auf. Zur mechanischen Stabilisierung einer als Stanz-Biege-Bauteil ausgeführten Stützhülse 1 kann an einer Seitenkante des Grundkörpers 2 eine Aussparung 9₁ ausgebildet sein, in welcher eine an der anderen Seitenkante des Grundkörpers 2 korrespondierend ausgebildete Erhebung 9₂ fixiert ist. Der stegförmige Bereich 4 der Stützhülse 1 ist vorzugsweise als eine Bördelung 4' ausgebildet

In einem ersten Ausführungsbeispiel der erfindungsgemäßen Stützhülse 1 gemäß der Figuren 1A und 1B sind das Außenprofil der Stützhülse 1, d. h. das Querschnittsprofil des Außenmantels 10 der Stützhülse 1, als auch das Innenprofil der Durchführung 5, d. h. das Querschnittsprofil des Innenmantels des stegförmigen Bereichs 4 bzw. der Begrenzung 11 der Durchführung 5, jeweils elliptisch ausgeformt. Wie insbesondere aus der stirnseitigen Darstellung der Stützhülse 1 in Fig. 1B zu entnehmen ist, weist die Begrenzung 11 der Durchführung 5 Bereiche auf, welche jeweils einem Abschnitt der Oberflächenkontur einer angrenzenden elektrischen Leitung 6₁ und 6₂ des elektrischen Leitungspaares 6 folgen. Aus Fig. 1B geht hervor, dass die gepunktet dargestellten halbzylindrisch geformten Bereiche 11₁ und 11₂ der Begrenzung 11 der Durchführung 5 den halbzylindrisch geformten Abschnitten der Oberflächenkontur der jeweils angrenzenden elektrischen Leitungen 6₁ und 6₂ folgen.

In einer zweiten Ausführungsform der erfindungsgemäßen Stützhülse 1 gemäß der Figuren 1C und 1D ist das Querschnittsprofil des Außenmantels 10 der Stützhülse 1 rund ausgebildet, während das Querschnittsprofil der Begrenzung 11 der Durchführung 5 wie in der ersten Ausführungsform der erfindungsgemäßen Stützhülse 1 elliptisch ausgeformt ist.

Äquivalent zur zweiten Ausführungsform der erfindungsgemäßen Stützhülse 1 ist in einer dritten Ausführungsform der erfindungsgemäßen Stützhülse 1 gemäß der Figuren 1E und 1F das Querschnittsprofil des Außenmantels 10 der Stützhülse 1 rund und das Querschnittsprofil der Begrenzung 11 der Durchführung 5 elliptisch ausgeformt. In Abgrenzung zur zweiten Ausführungsform ist in der dritten Ausführungsform die Durchführung 5 des stegförmigen Bereichs 4 der Stützhülse 1 in gestrichelt dargestellten Innenmantelabschnitten 12₁ und 12₂ des Innenmantels 12 des hülsenförmigen Grundkörpers 2 der Stützhülse 1 ausgesetzt. Der stegförmige Bereich 4 geht in die Innenmantelabschnitte 12₁ und 12₂ des hülsenförmigen Grundkörpers 2 derart über, dass der Außenmantelabschnitt einer angrenzenden elektrischen Leitung 6₁ bzw. 6₂ nicht am stegförmigen Bereich 4, sondern an zugehörigen Innenmantelabschnitten 12₁ bzw. 12₂ geführt ist. Zusätzlich können die elektrischen Leitungen 6₁ und 6₂, wie ebenfalls aus Fig. 1F hervorgeht, an Bereichen der Begrenzung 11 der Durchführung 5 im stegförmigen Bereich 4 der Stützhülse 1 anliegen.

In Fig. 1G ist ein viertes Ausführungsbeispielen der erfindungsgemäßen Stützhülse 1 mit einer Durchführung 5 im stegförmige Bereich 4 dargestellt, welche für die Fixierung und Führung von zwei elektrischen Leitungspaaren 6 geeignet ist. Das Innenprofil der Durchführung 5 ist rechteckförmig, insbesondere quadratisch, ausgebildet und weist abgerundete Ecken auf. Denkbar ist aber auch ein rechteckförmiges, insbesondere quadratisches, Innenprofil mit nicht abgerundeten Ecken. Die vier Seitenflächen des rechteckförmigen bzw. quadratischen Innenprofils der Durchführung 5 sind derart ausgebildet, dass sie jeweils eine elektrische Leitung oder zwei benachbarte elektrische Leitungen jeweils zumindest linienförmig kontaktieren und somit führen und fixieren.

Eine Stützhülse 1, welche ebenfalls zur Führung und Fixierung von zwei elektrischen Leitungspaaren 6 geeignet ist, ist in einem fünften Ausführungsbeispiel der erfindungsgemäßen Stützhülse 1 gemäß Fig. 1H dargestellt. Das Innenprofil der Durchführung 5 im stegförmige Bereich 4 der Stützhülse 1 ist "kleeblattförmig" ausgeformt und weist Ausbuchtungen 13 auf, in welchen jeweils eine elektrische Leitung der beiden elektrischen Leitungspaare 6 geführt und fixiert ist.

In einem sechsten Ausführungsbeispiel der erfindungsgemäßen Stützhülse 1 gemäß Fig. 1I sind im elliptisch geformten Innenprofil der Durchführung 5 scharfkantige Vorsprünge 14 ausgebildet, welche in einen Schirm 15 des Kabels 7 (siehe hierzu die Fig. 2A und 2B) im montierten Zustand der Stützhülse 1 am Kabel 7 eindringen können und somit die Fixierung der Stützhülse 1 am Kabel 7 verbessern. Die scharfkantigen Vorsprünge 14 sind vorzugsweise in Bereichen der Begrenzung 11 der Durchführung 5 ausgebildet, in welchen eine direkte Berührung zwischen den scharfkantigen Vorsprüngen 14 und den elektrischen Leitungen 6₁ und 6₂ der elektrischen Leitungspaare 6 ausgeschlossen ist.

Im siebten Ausführungsbeispiel der erfindungsgemäßen Stützhülse 1 gemäß Fig. 1J ist der stegförmige Bereich 4 der Stützhülse 1 mehrfach geschlitzt ausgeführt. Im Idealfall ist im verbauten Zustand der Stützhülse 1 jeder einzelne Schlitz 16 jeweils geschlossen. Zur Vermeidung von störenden Aufwölbungen bzw. Materialaufwerfungen im Bereich des stegförmigen Bereichs 4 der Stützhülse 1 im Prozessschritt des Biegens wird der stegförmige Bereich 4 der Stützhülse 1 in einzelne Segmente durch die Schlitze 16 aufgeteilt.

In Fig. 2A ist ein vorkonfektioniertes elektrischen Kabel 7 aus einem einzigen elektrischen Leitungspaar 6 mit zwei elektrischen Leitungen 6₁ und 6₂ zur Übertragung eines einzigen differenziellen Signals dargestellt. Die Fig. 2B zeigt ein vorkonfektioniertes elektrisches Kabel aus zwei elektrischen Leitungspaaren 6 mit jeweils zwei elektrischen Leitungen 6₁ und 6₂ in Stern-Vierer-Anordnung zur Übertragung von zwei differenziellen Signalen.

Die elektrischen Leitungen 6₁ und 6₂ jedes elektrischen Leitungspaares 6 sind gemeinsam vom Schirm 15 umhüllt. Der Schirm 15 wiederum ist von einem Kabelmantel 17 umhüllt. In einem axialen Endbereich 18 des elektrischen Kabels 7 ist der Schirm 15 vom Kabelmantel freigelegt. Die Stützhülse 1 ist am vom Kabelmantel 17 freigelegten Schirm 15 fixiert. Alternativ kann die Stützhülse 1 auch am Kabelmantel 17 fixiert sein. Der Schirm 15 ist um die Stützhülse 1 zurückgelegt, sodass am axialen Ende 19 des elektrischen Kabels 7 die elektrischen Leitungen 6₁ und 6₂ jedes elektrischen Leitungspaares 6 freigelegt sind.

Der stegförmige Bereich 4 der Stützhülse 1 kann zur Längserstreckung der Stützhülse 1 in einem bestimmten Winkelbereich orientiert sein:
Die Längserstreckung L_{S} des stegförmigen Bereichs 4 der Stützhülse 1 kann in einem Winkel φ von 90° zur Längsachse L_{A} der Stützhülse 1 (in Fig. 3A rechtsseitig, d. h. am kabelseitigen axialen Ende 22 der Stützhülse 1, dargestellter stegförmiger Bereich 4 der Stützhülse 1), in einem Winkel φ kleiner als 90° zur Längsachse L_{A} der Stützhülse 1 (in Fig. 3A linksseitig, d. h. am steckseitigen axialen Ende 3 der Stützhülse 1, dargestellter stegförmiger Bereich 4 der Stützhülse 1) oder in einem Winkel φ größer als 90° zur Längsachse L_{A} der Stützhülse 1 (in Fig. 3B linksseitig, d. h. am steckseitigen axialen Ende 3 der Stützhülse 1, dargestellter stegförmiger Bereich 4 der Stützhülse 1) orientiert sein.

Im Fall von kleinen Biegeradien ist vorzugsweise an der Innenkante zwischen dem hülsenförmigen Grundkörper 2 und dem stegförmige Bereich 4 der Stützhülse 1 ein Freistich 20 ausgebildet (in Fig. 3B am rechtsseitig, d. h. am kabelseitigen axialen Ende 22 der Stützhülse 1, dargestellten stegförmigen Bereich 4 der Stützhülse 1, und in Fig. 3A am linksseitig, d. h. am steckseitigen axialen Ende 3 der Stützhülse 1, dargestellten stegförmigen Bereich 4 der Stützhülse 1), um eine Bördelung des stegförmige Bereichs 4 zielführend zu verwirklichen.

Aus der Fig. 3B ist zusätzlich zu erkennen, dass am Innenmantel bzw. an der Begrenzung 11 der Durchführung 5 innen- und außenseitig jeweils eine Fase 21 ausgebildet ist, um ein Durchschneiden bzw. ein Durchbrechen der elektrischen Leitungen 6₁ und 6₂ jedes Leitungspaares 6 im Crimpprozess zu verhindern.

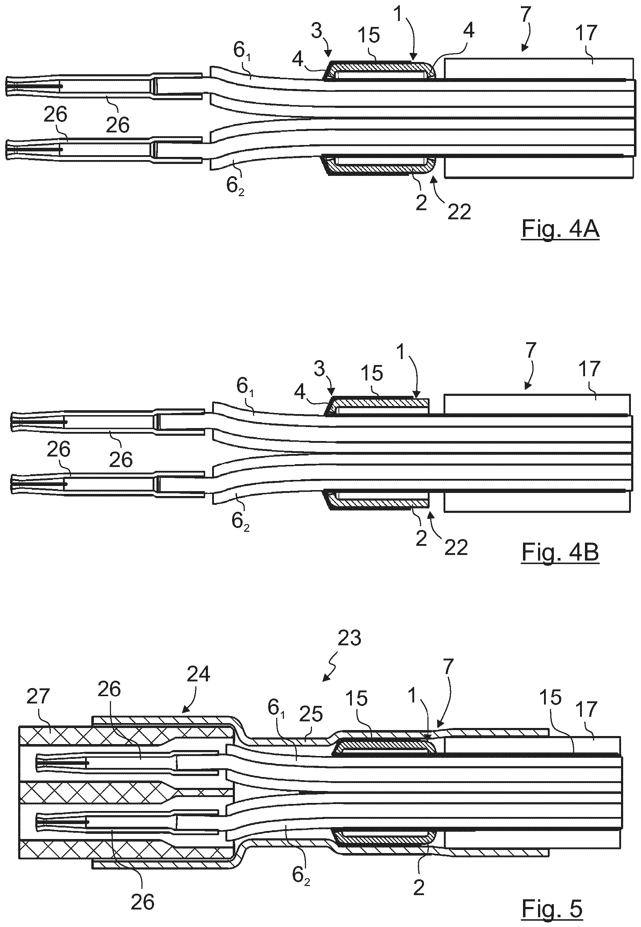

Aus Fig. 4A geht ein vorkonfektioniertes elektrisches Kabel 7 hervor, bei dem eine erste Ausprägung einer erfindungsgemäßen Stützhülse 1 mit einem stegförmigen Bereich 4 am steckseitige axialen Ende 3 und mit einem stegförmigen Bereich 4 am kabelseitigen axialen Ende 22 auf dem Schirm 15 fixiert ist. Bei einem elektrischen Kabel 7 mit verseilten elektrischen Leitungen 6₁ und 6₂ von wenigstens einem elektrischen Leitungspaar 6 ist das Innenprofil der Durchführung 5 im stegförmigen Bereich 4 am kabelseitigen axialen Ende 22 der Stützhülse 1 vorzugsweise rund ausgebildet, um zueinander verseilte elektrische Leitungen 6₁ und 6₂ von wenigstens einem elektrischen Leitungspaar 6 in einer beliebigen Orientierung zur Längsachse L_{A} der Stützhülse 1 durch den am kabelseitigen axialen Ende 22 ausgebildeten stegförmigen Bereich 4 der Stützhülse 1 hindurchzuführen.

Beim vorkonfektionierten elektrischen Kabel 7 der Fig. 4B ist eine zweite Ausprägung einer erfindungsgemäßen Stützhülse 1 einzig mit einem stegförmigen Bereich 4 am steckseitigen axialen Ende 3 auf dem Schirm 15 fixiert. Um die zueinander verseilten elektrischen Leitungen 6₁ und 6₂ von wenigstens einem elektrischen Leitungspaar 6 in einer beliebigen Orientierung zur Längsachse L_{A} der Stützhülse 1 in die Stützhülse 1 einzufügen, weist der hülsenförmige Grundkörper 2 in der zweiten Ausprägung der erfindungsgemäßen Stützhülse 1 vorzugsweise ein rundes Innen- bzw. Außenprofil auf.

Aus Fig. 5 geht eine erfindungsgemäße elektrische Steckverbinderanordnung 23 hervor, welche einen elektrischen Steckverbinder 24 und ein mit dem elektrischen Steckverbinder 24 elektrisch und mechanisch verbundenes vorkonfektioniertes elektrisches Kabel 7 aufweist. Der um die erfindungsgemäße Stützhülse 1 zurückgelegte Schirm 15 ist mit einem Außenleiterkontaktelement 25 des elektrischen Steckverbinders 24 über eine Crimpverbindung im Bereich der Stützhülse 1 elektrisch und mechanisch verbunden. Die beiden elektrischen Leitungen 6₁ und 6₂ des elektrischen Leitungspaares 6 sind jeweils mit einem Innenleiterkontaktelement 26 des elektrischen Steckverbinders 24 vorzugsweise über eine Crimpverbindung elektrisch und mechanisch verbunden. Die beiden Innenleiterkontaktelemente 26 sind über ein Isolatorelement 27 des elektrischen Steckverbinders 24 vom Außenleiterkontaktelement 25 elektrisch isoliert.

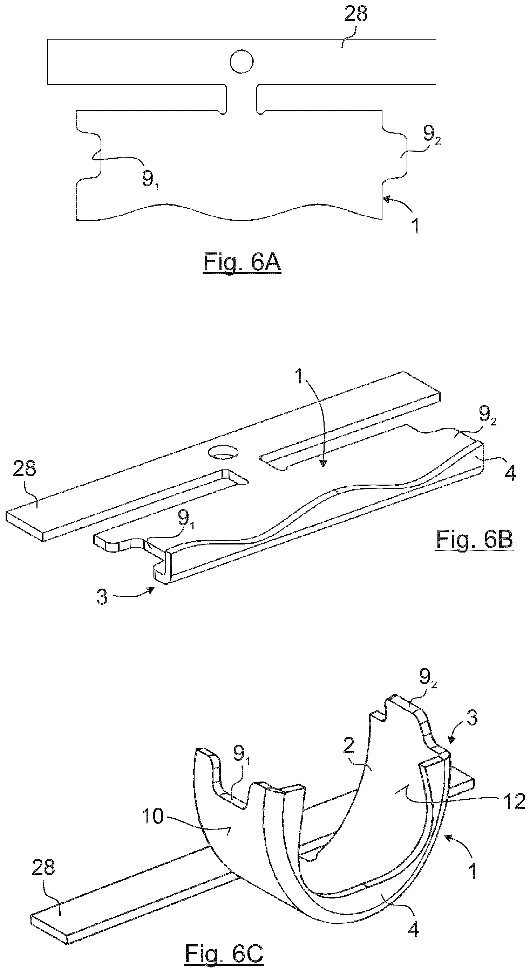

In den Figuren 6A - 6C sind die einzelnen Verfahrensschritte beim Herstellen der erfindungsgemäßen Stützhülse 1 dargestellt:
In einem ersten Verfahrensschritt gemäß Fig. 6A wird mittels eines Stanzprozesses ein planares Stanzbild der erfindungsgemäßen Stützhülse 1 hergestellt. Das planare Stanzbild der erfindungsgemäßen Stützhülse 1 ist hierbei an einem Trägerstreifen 28 angebunden.

In einem zweiten Verfahrensschritt gemäß Fig. 6B wird mittels eines Biegeprozesses, insbesondere eines Bördelungsprozesses, der wenigstens eine stegförmige Bereich 3 der erfindungsgemäßen Stützhülse 1 hergestellt.

In einem dritten Verfahrensschritt gemäß Fig. 6C wird mittels eines weiteren Biegeprozesses der Grundkörper 2 der erfindungsgemäßen Stützhülse 1 hülsenförmig gebogen. Hierbei kann der Grundkörper 2 der Stützhülse 1 in einer ersten Ausführung eines Fertigungsverfahrens vollständig hülsenförmig gebogen werden und das vorkonfektionierte elektrische Kabel 7 axial in die hülsenförmige Stützhülse 1 eingefügt werden. In einer zweiten Ausführung eines Fertigungsverfahrens kann der Grundkörper 2 der Stützhülse 1 in einem ersten Biegeschritt U-förmig gebogen werden, das vorkonfektionierte elektrische Kabel 7 seitlich in die U-förmig gebogene Stützhülse 1 eingefügt werden und der Grundkörper 2 der Stützhülse 1 vollständig hülsenförmig gebogen werden.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

## Patentansprüche

1. Stützhülse (1) zur Führung und zur Fixierung von wenigstens einer Leitung (6₁, 6₂), vorzugsweise von wenigstens einer elektrischen Leitung (6₁, 6₂), aufweisend einen Grundkörper (2), welcher um eine Längsachse (L_{A}) der Stützhülse (1) hülsenförmig ausgebildet ist, wobei an wenigstens einem axialen Ende (3, 22) des hülsenförmigen Grundkörpers (2) jeweils ein zur Längsachse (L_{A}) gerichteter stegförmiger Bereich (4) mit einer Durchführung (5) derart ausgebildet ist, dass jede Leitung (6₁, 6₂) jeweils bewegungsfrei in der Durchführung (5) gehalten ist.

2. Stützhülse (1) nach Patentanspruch 1,
**dadurch gekennzeichnet,**
**dass** eine Begrenzung (11) der Durchführung (5) wenigstens Bereiche (11₁, 11₂) aufweist, welche jeweils derart ausgeformt sind, um wenigstens einem Abschnitt einer Oberflächenkontur einer angrenzenden Leitung (6₁, 6₂) zu folgen.

3. Stützhülse (1) nach Patentanspruch 1,
**dadurch gekennzeichnet,**
**dass** die Durchführung (5) ein rechteckförmiges Profil aufweist, deren Seitenflächen jeweils derart ausgebildet sind, um mit wenigstens einer angrenzenden Leitung (6₁, 6₂) jeweils zumindest linienförmig verbunden zu sein.

4. Stützhülse (1) nach einem der Patentansprüche 1 bis 3,
**dadurch gekennzeichnet,**
**dass** die Stützhülse (1) als ein Stanz-Biege-Teil ausgebildet ist.

5. Stützhülse (1) nach einem der Patentansprüche 1 bis 4,
**dadurch gekennzeichnet,**
**dass** der stegförmige Bereich (4) als eine Bördelung (4') ausgebildet ist.

6. Stützhülse (1) nach einem der Patentansprüche 1 bis 5, **dadurch gekennzeichnet,**
**dass** im stegförmigen Bereich (4) wenigstens ein Schlitz (16) ausgebildet ist.

7. Stützhülse (1) nach einem der Patentansprüche 1 bis 6,
**dadurch gekennzeichnet,**
**dass** zur Fixierung eines Leitungspaares (6) aus zwei Leitungen (6₁, 6₂) ein Querschnitt eines Außenmantels (10) der Stützhülse (1) entlang einer Längserstreckung des Grundkörpers (2) jeweils elliptisch ausgeformt ist.

8. Stützhülse (1) nach einem der Patentansprüche 1 bis 6,
**dadurch gekennzeichnet,**
**dass** ein Querschnitt eines Außenmantels (10) der Stützhülse (1) entlang einer Längserstreckung des Grundkörpers (2) jeweils rund ausgeformt ist.

9. Stützhülse (1) nach einem der Patentansprüche 1 bis 8,
**dadurch gekennzeichnet,**
**dass** eine Längserstreckung des stegförmigen Bereichs (4) zur Längsachse (L_{A}) in einem Winkel zwischen 45° und 135°, vorzugsweise in einem Winkel zwischen 70° und 110° und besonders vorzugsweise in einem Winkel zwischen 90° und 100° orientiert ist.

10. Stützhülse (1) nach einem der Patentansprüche 1 bis 9,
**dadurch gekennzeichnet,**
**dass** an einer Innenkante zwischen dem hülsenförmigen Grundkörper (2) und dem stegförmigen Bereich (4) ein Freistich (20) ausgebildet ist.

11. Stützhülse (1) nach einem der Patentansprüche 1 bis 10,
**dadurch gekennzeichnet,**
**dass** der stegförmige Bereich (4) umlaufend ausgebildet ist.

12. Stützhülse (1) nach einem der Patentansprüche 1 bis 10,
**dadurch gekennzeichnet,**
**dass** der stegförmige Bereich (4) in Innenmantelabschnitten (12₁, 12₂) des hülsenförmigen Grundkörpers (2) derart ausgesetzt ist, dass der jeweilige Innenmantelabschnitt (11₁, 11₂) mit einem korrespondierenden Außenmantelabschnitt der zugehörigen Leitung (6₁, 6₂) verbunden ist.

13. Stützhülse (1) nach einem der Patentansprüche 1 bis 12,
**dadurch gekennzeichnet,**
**dass** an einer Begrenzung (11) der Durchführung (5) wenigstens ein spitzer oder scharfkantiger Vorsprung (14) ausgebildet ist.

14. Vorkonfektioniertes Kabel (7), vorzugsweise vorkonfektioniertes elektrisches Kabel (7), aufweisend wenigstens eine Leitung (6₁, 6₂), einen die wenigstens eine Leitung (6₁, 6₂) jeweils umhüllenden Schirm (15) und einen den Schirm (15) umhüllenden Kabelmantel (17), wobei in einem axialen Endbereich des vorkonfektionierten Kabels (7) der Schirm (15) vom Kabelmantel (17) freigelegt ist, wobei am freigelegten Schirm (15) und/oder auf dem Kabelmantel (17) eine Stützhülse (1) gemäß einem der Patentansprüche 1 bis 13 fixiert ist, wobei ein axialer Endbereich des Schirms (15) um die Stützhülse (1) zurückgelegt ist.

15. Steckverbinderanordnung (23), vorzugsweise elektrische Steckverbinderanordnung (23), aufweisend ein vorkonfektioniertes Kabel (7) gemäß Patentanspruch 14 und einen mit dem vorkonfektionierten Kabel (7) verbundenen Steckverbinder (24), wobei der Steckverbinder (24) ein Außenleiterkontaktelement (25) aufweist, welches mit dem auf der Stützhülse (1) zurückgelegten axialen Endbereich des Schirms (15) verpresst, vorzugsweise vercrimpt, ist.

## Geänderte Patentansprüche

### Geänderte Patentansprüche gemäss Regel 137(2) EPÜ.

1. Stützhülse (1) zur Führung und zur Fixierung von wenigstens einer Leitung (6₁, 6₂), vorzugsweise von wenigstens einer elektrischen Leitung (6₁, 6₂), aufweisend einen Grundkörper (2), welcher um eine Längsachse (L_{A}) der Stützhülse (1) hülsenförmig ausgebildet ist, wobei an wenigstens einem axialen Ende (3, 22) des hülsenförmigen Grundkörpers (2) jeweils ein zur Längsachse (L_{A}) gerichteter stegförmiger Bereich (4) mit einer Durchführung (5) derart ausgebildet ist, dass jede Leitung (6₁, 6₂) jeweils bewegungsfrei in der Durchführung (5) gehalten ist, wobei eine Klemmung der wenigstens einen Leitung (6₁, 6₂) innerhalb der Stützhülse (1) auf den Bereich der stegförmigen Bereiche (4) der Stützhülse (1) beschränkt ist.

2. Stützhülse (1) nach Patentanspruch 1,
**dadurch gekennzeichnet,**
**dass** eine Begrenzung (11) der Durchführung (5) wenigstens Bereiche (11₁, 11₂) aufweist, welche jeweils derart ausgeformt sind, um wenigstens einem Abschnitt einer Oberflächenkontur einer angrenzenden Leitung (6₁, 6₂) zu folgen.

3. Stützhülse (1) nach Patentanspruch 1,
**dadurch gekennzeichnet,**
**dass** die Durchführung (5) ein rechteckförmiges Profil aufweist, deren Seitenflächen jeweils derart ausgebildet sind, um mit wenigstens einer angrenzenden Leitung (6₁, 6₂) jeweils zumindest linienförmig verbunden zu sein.

4. Stützhülse (1) nach einem der Patentansprüche 1 bis 3, **dadurch gekennzeichnet,**
**dass** die Stützhülse (1) als ein Stanz-Biege-Teil ausgebildet ist.

5. Stützhülse (1) nach einem der Patentansprüche 1 bis 4, **dadurch gekennzeichnet,**
**dass** der stegförmige Bereich (4) als eine Bördelung (4') ausgebildet ist.

6. Stützhülse (1) nach einem der Patentansprüche 1 bis 5, **dadurch gekennzeichnet,**
**dass** im stegförmigen Bereich (4) wenigstens ein Schlitz (16) ausgebildet ist.

7. Stützhülse (1) nach einem der Patentansprüche 1 bis 6, **dadurch gekennzeichnet,**
**dass** zur Fixierung eines Leitungspaares (6) aus zwei Leitungen (6₁, 6₂) ein Querschnitt eines Außenmantels (10) der Stützhülse (1) entlang einer Längserstreckung des Grundkörpers (2) jeweils elliptisch ausgeformt ist.

8. Stützhülse (1) nach einem der Patentansprüche 1 bis 6, **dadurch gekennzeichnet,**
**dass** ein Querschnitt eines Außenmantels (10) der Stützhülse (1) entlang einer Längserstreckung des Grundkörpers (2) jeweils rund ausgeformt ist.

9. Stützhülse (1) nach einem der Patentansprüche 1 bis 8, **dadurch gekennzeichnet,**
**dass** eine Längserstreckung des stegförmigen Bereichs (4) zur Längsachse (L_{A}) in einem Winkel zwischen 45° und 135°, vorzugsweise in einem Winkel zwischen 70° und 110° und besonders vorzugsweise in einem Winkel zwischen 90° und 100° orientiert ist.

10. Stützhülse (1) nach einem der Patentansprüche 1 bis 9, **dadurch gekennzeichnet,**
**dass** an einer Innenkante zwischen dem hülsenförmigen Grundkörper (2) und dem stegförmigen Bereich (4) ein Freistich (20) ausgebildet ist.

11. Stützhülse (1) nach einem der Patentansprüche 1 bis 10, **dadurch gekennzeichnet,**
**dass** der stegförmige Bereich (4) umlaufend ausgebildet ist.

12. Stützhülse (1) nach einem der Patentansprüche 1 bis 10, **dadurch gekennzeichnet,**
**dass** der stegförmige Bereich (4) in Innenmantelabschnitten (12₁, 12₂) des hülsenförmigen Grundkörpers (2) derart ausgesetzt ist, dass der jeweilige Innenmantelabschnitt (11₁, 11₂) mit einem korrespondierenden Außenmantelabschnitt der zugehörigen Leitung (6₁, 6₂) verbunden ist.

13. Stützhülse (1) nach einem der Patentansprüche 1 bis 12, **dadurch gekennzeichnet,**
**dass** an einer Begrenzung (11) der Durchführung (5) wenigstens ein spitzer oder scharfkantiger Vorsprung (14) ausgebildet ist.

14. Vorkonfektioniertes Kabel (7), vorzugsweise vorkonfektioniertes elektrisches Kabel (7), aufweisend wenigstens eine Leitung (6₁, 6₂), einen die wenigstens eine Leitung (6₁, 6₂) jeweils umhüllenden Schirm (15) und einen den Schirm (15) umhüllenden Kabelmantel (17), wobei in einem axialen Endbereich des vorkonfektionierten Kabels (7) der Schirm (15) vom Kabelmantel (17) freigelegt ist, wobei am freigelegten Schirm (15) und/oder auf dem Kabelmantel (17) eine Stützhülse (1) gemäß einem der Patentansprüche 1 bis 13 fixiert ist, wobei ein axialer Endbereich des Schirms (15) um die Stützhülse (1) zurückgelegt ist.

15. Steckverbinderanordnung (23), vorzugsweise elektrische Steckverbinderanordnung (23), aufweisend ein vorkonfektioniertes Kabel (7) gemäß Patentanspruch 14 und einen mit dem vorkonfektionierten Kabel (7) verbundenen Steckverbinder (24), wobei der Steckverbinder (24) ein Außenleiterkontaktelement (25) aufweist, welches mit dem auf der Stützhülse (1) zurückgelegten axialen Endbereich des Schirms (15) verpresst, vorzugsweise vercrimpt, ist.
